# EUROPÄISCHE PATENTSCHRIFT

(11) **EP 1 059 115 B1**
(45) Veröffentlichungstag und Bekanntmachung des Hinweises auf die Patenterteilung: **26.05.2004**
(21) Anmeldenummer: 00106801.4
(22) Anmeldetag: 30.03.2000
(51) Int. Cl.: B01J 8/06, B01J 8/00, B01J 19/24, B01J 19/00, B01J 12/00, C01B 3/32

(54) **Chemischer Reaktor für ein Brennstoffzellensystem**
Chemical reactor for a fuel cell system
Réacteur chimique pour systèmes de piles à combustibles

(30) Priorität: 11.06.1999 DE 19926608
(43) Veröffentlichungstag der Anmeldung: 13.12.2000
(73) Patentinhaber: Ballard Power Systems AG, 73230 Kirchheim / Teck-Nabern (DE)
(72) Erfinder: Brauchle, Stefan, 88400 Biberach/Riss (DE); Wolfsteiner, Matthias, 73230 Kirchheim (DE)
(74) Vertreter: Beyer, Andreas, Dr.

(56) Entgegenhaltungen:
- DE-C- 19 526 886
- US-A- 4 342 699
- US-A- 4 873 368
- "CHEMICAL ABSTRACTS + INDEXES,US,AMERICAN CHEMICAL SOCIETY. COLUMBUS" CHEMICAL ABSTRACTS + INDEXES,US,AMERICAN CHEMICAL SOCIETY. COLUMBUS, XP000317621 ISSN: 0009-2258
- "CHEMICAL ABSTRACTS + INDEXES,US,AMERICAN CHEMICAL SOCIETY. COLUMBUS" CHEMICAL ABSTRACTS + INDEXES,US,AMERICAN CHEMICAL SOCIETY. COLUMBUS, XP000407895 ISSN: 0009-2258

## Beschreibung

Die Erfindung betrifft einen chemischen Reaktor für ein Brennstoffzellensystem gemäß dem Oberbegriff des Patentanspruchs 1.

Aus der DE 195 26 886 C1 ist eine Vorrichtung zur Methanolreformierung bekannt, bei der die wirksame Länge und/oder der wirksame Eintrittsquerschnitt eines eingangsseitigen, auf hohen Methanolumsatz temperierten Reaktionsraumabschnitts in Abhängigkeit vom Durchsatz an zu reformierendem Gasgemisch so eingestellt werden kann, dass sich eine im wesentlichen konstant bleibende Verweildauer des zu reformierenden Gasgemischs in dem auf hohen Methanolumsatz temperierten Reaktorraumabschnitt ergibt.

Die Lastspreizung des Systems wird somit verbessert und weniger durch die ansonsten starke Variation der Eduktverweildauer beeinflusst; ebenso werden unerwünschte Rückreaktionen durch zu lange Verweilzeiten vermieden. Trotzdem ist das Verhalten des Systems unter Kaltstartbedingungen ungünstig, da die üblicherweise verwendeten Reformierüngsreaktionen unvermeidlich hohe Wärmekapazitäten aufweisen.

Aus den Chemical Abstracts XP 000317621 (ISSN: 0009-2258) und XP 000407895 (ISSN: 0009-2258) der American Chemical Society, Columbus, Ohio, USA sind ferner verschiedene Stapelreaktoren bekannt.

Der Erfindung liegt die Aufgabe zugrunde, einen chemischen Reaktor für ein Brennstoffzellensystem anzugeben, welcher ein verbessertes Kaltstartverfahren aufweist.

Diese Aufgabe wird von einem Reformierungsreaktor mit den Merkmalen des Patentanspruchs 1 gelöst.

Der erfindungsgemäße Reaktor weist einen Reaktionsraum mit zumindest einem Reaktionsteilraum einer ersten Art und zumindest einem Reaktionsteilraum einer zweiten Art auf, wobei nur der zumindest eine Reaktionsteilraum der ersten Art beim Starten des Systems freigegeben ist, wobei der Reaktionsteilraum der ersten Art so ausgebildet ist, dass dieser unter gleichen Betriebsbedingungen schneller erwärmt als ein Reaktionsraum der zweiten Art.

Günstig ist, mehr als einen Reaktionsteilraum der ersten Art vorzusehen. Besonders vorteilhaft ist, die Reaktionsteilräume der ersten Art möglichst homogen im Inneren des Reaktionsraumes anzuordnen. Dies hat zur Folge, dass sich der Reaktionsraum besonders in der Kaltstartphase schnell und über seine Ausdehnung homogen aufwärmt. Ein Temperaturgradient zwischen Eingang und Ausgang des Reaktionsraumes wird vermieden.

Weitere Ausgestaltungen und Vorteile der Erfindung sind den weiteren Ansprüchen und der Beschreibung zu entnehmen:

Im weiteren wird die Erfindung anhand von Figuren näher erläutert. Es zeigen:
- Fig. 1: eine schematische Darstellung eines erfindungsgemäßen Reaktors und
- Fig. 2: eine schematische Darstellung eines bevorzugten Reaktors mit Reaktions- und Kühlraum in Stapelbauweise.

Die Erfindung wird anhand eines Reaktors zur Methanolreformierung beschrieben, ist jedoch nicht auf diese Anwendung eingeschränkt. Vielmehr kann der erfindungsgemäße chemische Reaktor für die Gaserzeugung, die Gasreinigung und/oder die Abgasnachbehandlung in Brennstoffzellensystemen verwendet werden, wie z. B. für Reformierungsreaktoren zur Methanolreformierung, katalytische Brenner, Kohlenmonoxid-Oxidationseinheiten. Das Medium, das durch den Reaktionsraum strömt, kann flüssig oder gasförmig sein. Besonders günstig ist die Verwendung des erfindungsgemäßen chemischen Reaktors für von Brennstoffzellensysteme versorgte und/oder angetriebene Fahrzeuge.

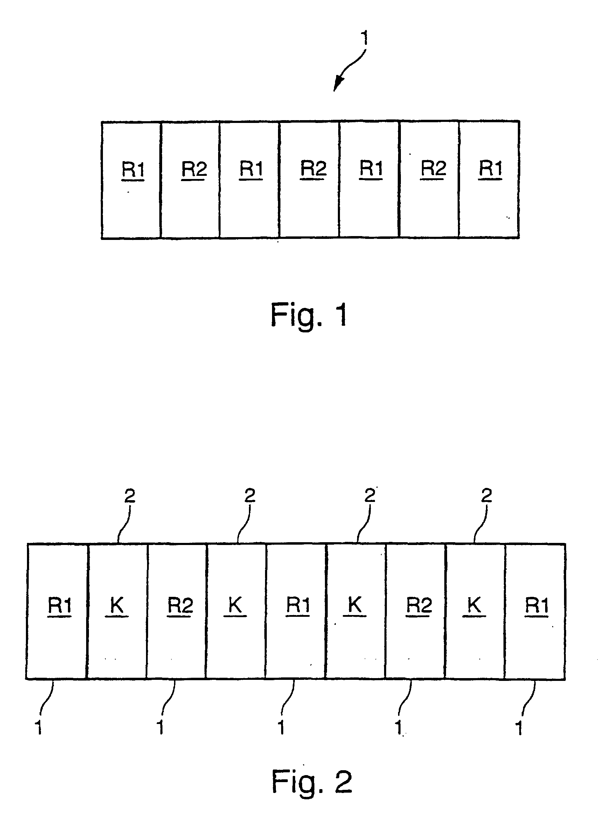

In Fig. 1 ist schematisch ein bevorzugter Reaktionsraum 1 zur Methanolreformierung dargestellt, welcher eine Anzahl von Reaktionsteilräumen aufweist, die mit R1 und R2 gekennzeichnet sind. Die Reaktionsteilräume R1 und R2 sind jeweils katalysatorhaltig. Die Anordnung entspricht einem Reaktor in Stapelbauweise. Der Reaktionsraum 1 wird durch die Gesamtheit der Reaktionsteilräume R1 und R2 gebildet. Zuführungen für Medien oder Kühleinrichtungen sind nicht dargestellt.

R1 und R2 stellen jeweils Reaktionsteilräume einer ersten und einer zweiten Art dar. In der Kaltstartphase des Reaktors 1 werden nur die Reaktionsteilräume R1 der ersten Art freigegeben und von einem zu reformierenden Gasgemisch durchströmt. Die Reaktionsteilräume R2 der zweiten Art sind in dieser Kaltstartphase abgesperrt.

Zweckgemäß ist, die Reaktionsteilräume R1 der ersten Art so auszugestalten, dass sie besonders schnell aufwärmen und damit für die Kaltstartphase optimiert sind. So kann ein Reaktionsteilraum R1 einen kaltstartfähigen Katalysator beinhalten, insbesondere kann ein Reaktionsteilraum R1 mit einer großen Menge eines Katalysators oder einem chemisch besonders aktiven Katalysator beschickt sein. Wird Platin als Katalysator verwendet, kann in den Reaktionsteilräumen R1 der ersten Art mehr Platin vorhanden sein und dafür in den Reaktionsteilräumen R2 der zweiten Art weniger Platin als üblich eingesetzt sein, so dass sich bei entsprechender Anordnung der beiden Reaktionsteilraumarten im Reaktionsraum 1 insgesamt eine vorteilhafte Einsparung an Platin ergibt. Eine weitere Möglichkeit ist, die thermische Ankopplung an die Umgebung und/oder die Wärmekapazität der Reaktionsteilräume R1 der ersten Art für ein schnelles Aufwärmen dieser Reaktionsteilräume geeignet auszubilden.

In einer weiteren bevorzugten Ausführung weist der Reaktionsraum 1 jeweils mehrere Reaktionsteilräume R1, R2 der ersten und der zweiten Art auf. Vorteilhaft ist dabei, die Reaktionsteilräume der ersten Art R1 so innerhalb des Reaktionsraumes 1 zu verteilen, dass diese, wenn nur diese in der Kaltstartphase von zu reformierendem Gasgemisch durchströmt werden, den Reaktionsraum im wesentlichen homogen aufwärmen. Entlang des Stapels kann sich kein Temperaturgradient mit einem kalten und einem warmen Ende des Stapels ausbilden. Zuerst werden die durchströmten Reaktionsteilräume R1 der ersten Art erwärmt und erreichen schnell die für die chemische Reaktion benötigte Temperatur. Die nicht durchströmten Reaktionsteilräume R2 der zweiten Art werden dann von den benachbarten Reaktionsteilräumen R1 der ersten Art mit aufgewärmt, so dass diese schneller betreibsbereit sind, wenn die Kaltstartphase abgeschlossen ist. Die Kaltstartphase mit ihren ungünstigen Betriebsbedingungen wird dadurch insgesamt verkürzt.

Besonders günstig ist, jeweils als ersten und letzten der Reaktionsteilräume im Stapel einen Reaktionsteilraum R1 der ersten Art vorzusehen. Damit wird eine unerwünschte Abkühlung des Reaktorstapels durch eine thermische Kopplung nach außen an die Umgebung des Reaktors zumindest stark abgeschwächt.

Es können die Reaktionsteilräume R1 der ersten Art jeweils einzeln, z.B. alternierend mit den Reaktionsteilräumen R2 der zweiten Art, weitgehend homogen innerhalb des Reaktionsraums 1 verteilt werden. Es ist auch möglich, mehrere benachbarte Reaktionsräume als Reaktionsteilräume R1 der ersten Art auszubilden und solche Reaktionsteilraum-Gruppen innerhalb des Reaktionsraums zu verteilen.

Nach der Kaltstartphase werden die, vorzugsweise durch die Reaktionsteilräume R1 der ersten Art vorgewärmten, Reaktionsteilräume R2 der zweiten Art freigegeben und von zu reformierendem Gasgemisch durchströmt. Dann können die Reaktionsteilräume R1 der ersten Art ganz oder teilweise abgesperrt werden.

In Fig. 2 ist eine bevorzugte Ausgestaltung der erfindungsgemäßen Vorrichtung schematisch dargestellt. Die Vorrichtung weist einen Reaktionsraum 1 und einen Kühlraum 2 auf. Die Anordnung entspricht einer Stapelbauweise. Wie im Beispiel der Fig. 1 kann jedoch auch ein Rohrbündelreaktor derart ausgestaltet sein. Der Reaktionsraum 1 wird durch die Gesamtheit der Reaktionsteilräume R1, R2 gebildet; der Kühlraum wird durch die Gesamtheit der Kühlräume K gebildet.

Die Reaktionsteilräume R1, R2 des Reaktionsraums und die Kühlteilräume K des Kühlraums 2 sind alternierend angeordnet, so dass jedem Reaktionsteilraum R1, R2 zumindest ein Kühlteilraum K in üblicher Weise zugeordnet ist.

Zweckmäßig ist, die den abgesperrten Reaktionsteilräume R1 oder R2 zugeordneten Kühlräumteile K ebenfalls abzusperren, bzw. bei freigegebenen Reaktionsteilräumen R1, R2 die zugeordneten Kühlteilräume K ebenfalls freizugeben, so dass abgesperrte Reaktionsteilräume R1, R2 nicht gekühlt und freigegebene Reaktionsteilräume R1, R2 gekühlt werden. Dabei kann die Kühlung in üblicher Weise durch eine endotherme Reaktion oder durch ein passives Wärmetauschermedium, etwa Öl oder Wasser erfolgen.

Neben der oben beschriebenen Möglichkeit, Reaktionsteilräume R1 der ersten Art mit mehr oder aktiverem Katalysator zu beschicken als Reaktionsteilräume R2 der zweiten Art, kann das schnellere Aufwärmen von Reaktionsteilräumen R1 der ersten Art auch dadurch erreicht werden, dass diese Reaktionsteilräume R1 gegenüber korrespondierenden Kühlteilräumen K thermisch entkoppelt sind, oder auch dass korrespondierende Kühlteilräume K von weniger Kühlmedium durchströmt werden oder einem geringeren Umsatz bei einer endothermen Reaktion aufweisen als mit Reaktionsteilräumen R2 der zweiten Art korrespondierende Kühlteilräume K.

Es ist weiterhin möglich, den erfindungsgemäßen Reaktor auch im Normalbetrieb so zu betreiben, dass entsprechend der jeweiligen Leistungsanforderung an das vom Reaktor versorgte System, z. B. ein Brennstoffzellensystem, Reaktionsteilräume freigegeben oder abgesperrt werden. Normalbetrieb bedeutet, dass der Reaktionsraum 1 sich bei der gewünschten Betriebstemperatur befindet. Dabei entspricht Vollast dem Zustand, bei dem alle freizugebenden Reaktionsteilräume R1 und/oder R2 freigegeben sind und das zu reformierende Gasgemisch umsetzen. Es können dann alle Arten von Reaktionsteilräumen R1 und R1 freigegeben sein, es können jedoch auch nur Reaktionsteilräume R2 der zweiten Art freigegeben sein. Dies ist zweckmäßig, wenn Reaktionsteilräume R1 der ersten Art speziell für den Einsatz beim Kaltstart optimiert sind. Im folgenden wird der Einfachheit halber davon ausgegangen, dass alle Reaktionsteilräume R1 und R2 bei Vollast freigegeben sind. Selbstverständlich kann auch die alternative Ausgestaltung in der nachfolgend beschriebenen Weise betrieben werden.

Wird weniger Leistung angefordert, d.h. soll weniger Reformat erzeugt werden, wird eine entsprechende Anzahl von Reaktionsteilräumen R1, R2 abgesperrt. Dabei ist es vorteilhaft, beim Absperren der Reaktionsteilräume R1, R2 darauf zu achten, dass die abgesperrten Reaktionsteilräume R1, R2 im Reaktionsraum 1 im wesentlichen homogen verteilt sind, so dass sich kein unerwünschter Temperaturgradient ausbilden kann und die abgesperrten Reaktionsteilräume R1, R2 nicht übermäßig abkühlen, da sie von den benachbarten freigegebenen Reaktionsteilräumen noch nicht beheizt werden. Bei der folgenden Freigabe der abgesperrten Reaktionsteilräume R1, R2 sind diese dann schneller wieder auf Betriebstemperatur; ein Temperaturgradient zwischen den abgesperrten und freigegebenen Reaktionsteilräumen R1,R2 kann damit minimiert werden.

Weiterhin ist es günstig, bei hintereinander folgenden Absperrzyklen von Reaktionsteilräumen R1, R2 vorzusehen, möglichst unterschiedliche Reaktionsteilräume R1, R2 in unmittelbar aufeinanderfolgenden Zyklen abzusperren. Damit kann der Katalysator des Reaktionsraumes gleichmäßig ausgenutzt werden. Die im Normalbetrieb abgesperrten und/oder freigegebenen Reaktionsteilräume R1, R2 können auch zu Gruppen zusammengefasst und im Reaktionsraum 1 verteilt sein, wie dies bei der Teilabschaltung in der Kaltstartphase beschrieben wurde.

## Patentansprüche

1. Chemischer Reaktor für ein Brennstoffzellensystem mit einem von einem Medium durchströmbaren Reaktionsraum (1) mit zumindest zwei parallel zueinander angeordneten Reaktionsteilräumen (R1, R2), wobei der wirksame eingangseitige Reaktionsraumquerschnitt des Reaktionsraums (1) durch Freigeben oder Absperren der voneinander getrennt parallel angeordneten Reaktionsteilräume (R1, R2) einstellbar ist,
**dadurch gekennzeichnet, dass** der Reaktionsraum (1) zumindest einen Reaktionsteilraum (R1) einer ersten Art und zumindest einen Reaktionsteilraum (R2) einer zweiten Art aufweist, wobei nur der zumindest eine Reaktionsteilraum (R1) der ersten Art beim Starten des Systems freigegeben ist und wobei der zumindest eine Reaktionsteilraum (R1) der ersten Art derart unterschiedlich zu dem zumindest einen Reaktionsteilraum (R2) der zweiten Art ausgebildet ist, dass er unter vergleichbaren Betriebsbedingungen schneller erwärmbar ist als der zumindest eine Reaktionsteilraum (R2) der zweiten Art.

2. Reaktor nach Anspruch 1,
**dadurch gekennzeichnet, dass** der zumindest eine Reaktionsteilraum (R1) der ersten Art eine geringere Wärmekapazität und/oder einen Katalysator mit einer höheren Aktivität aufweist und/oder an seine Umgebung thermisch schlechter gekoppelt und/oder weniger gekühlt ist als der zumindest eine Reaktionsteilraum (R2) der zweiten Art.

3. Vorrichtung nach Anspruch 1,
**dadurch gekennzeichnet, dass** der Reaktionsraum (1) zumindest zwei Reaktionsteilräume (R1) der ersten Art aufweist.

4. Vorrichtung nach Anspruch 3,
**dadurch gekennzeichnet, dass** die Reaktionsteilräume (R1) der ersten Art einzeln im wesentlichen homogen innerhalb des Reaktionsraums (1) verteilt sind.

5. Vorrichtung nach Anspruch 3,
**dadurch gekennzeichnet, dass** die Reaktionsteilräume (R1) der ersten Art zu Gruppen mehrerer benachbarten Reaktionsteilräume (R1) zusammengefasst sind und dass die Gruppen im wesentlichen homogen innerhalb des Reaktionsraumes (1) verteilt sind.

6. Vorrichtung nach Anspruch 1,
**dadurch gekennzeichnet, dass** der Reaktionsraum (1) mit einem Kühlraum (2) in einem Plattenreaktor gekoppelt ist.

7. Vorrichtung nach Anspruch 6,
**dadurch gekennzeichnet, dass** jeder Reaktionsteilraum (R1, R2) mit je einem Kühlteilraum (K) gekoppelt ist.

8. Vorrichtung nach Anspruch 6,
**dadurch gekennzeichnet, dass** der erste und der letzte Reaktionsteilraum (R1) des Reaktionsraumes (1) durch einen Reaktionsteilraum (R1) der ersten Art ausgebildet ist.

9. Vorrichtung nach Anspruch 6,
**dadurch gekennzeichnet, dass** jeweils miteinander gekoppelte, korrespondierende Reaktionsteilräume (R1, R2) und Kühlräume (K) gleichzeitig freigegeben oder abgesperrt sind.

10. Vorrichtung nach Anspruch 1,
**dadurch gekennzeichnet, dass** im Normalbetrieb Reaktionsteilräume (R1, R2) entsprechend der Menge des zu reformierenden Gasgemisches freigegeben oder abgesperrt sind.

11. Vorrichtung nach Anspruch 10, **dadurch gekennzeichnet, dass** im Normalbetrieb freigegebene und/oder abgesperrte Reaktionsteilräume (R1, R2) im Reaktionsraum (1) so verteilt sind, dass ein Temperaturgradient zwischen abgesperrten und freigegebenen Reaktionsteilräumen (R1, R2) minimal ist.

12. Vorrichtung nach Anspruch 1,
**dadurch gekennzeichnet, dass** der Reaktionsraum (1) durch ein Rohrbündel gebildet ist.

## Claims

1. Chemical reactor for a fuel cell system comprising a reaction chamber (1), through which a medium may flow, having at least two partial reaction chambers (R1, R2) in parallel arrangement, wherein the effective inlet-side reaction chamber cross section of the reaction chamber (1) is adjustable by unblocking or blocking the partial reaction chambers (R1, R2) being arranged separately and in parallel with respect to each other,
**characterized in that** the reaction chamber (1) comprises at least one partial reaction chamber (R1) of a first kind and at least one partial reaction chamber (R2) of a second kind, wherein upon starting the system only the at least one partial reaction chamber (R1) of the first kind is unblocked, and wherein the at least one partial reaction chamber (R1) of the first kind differs from the at least one partial reaction chamber (R2) of the second kind **in that** it is adapted to be heated more rapidly than the at least one partial reaction chamber (R2) of the second kind under comparable operating conditions.

2. Reactor according to claim 1,
**characterized in that** the at least one partial reaction chamber (R1) of the first kind has a lower thermal capacity and/or has a catalyst with higher activity and/or is less well thermally coupled to its surroundings and/or is less cooled than the at least one partial reaction chamber (R2) of the second kind.

3. Device according to claim 1,
**characterized in that** the reaction chamber (1) comprises at least two partial reaction chambers (R1) of the first kind.

4. Device according to claim 3,
**characterized in that** the partial reaction chambers (R1) of the first kind are individually and substantially homogenously distributed within the reaction chamber (1).

5. Device according to claim 3,
**characterized in that** the partial reaction chambers (R1) of the first kind are arranged in groups of a plurality of adjacent partial reaction chambers (R1) and **in that** the groups are substantially homogenously distributed within the reaction chamber (1).

6. Device according to claim 1,
**characterized in that** the reaction chamber (1) is coupled to a cooling chamber (2) within a plate reactor.

7. Device according to claim 6,
**characterized in that** each of the partial reaction chambers (R1, R2) is coupled to one respective partial cooling chamber (K).

8. Device according to claim 6,
**characterized in that** the first and the last partial reaction chambers (R1) of the reaction chamber (1) are each constituted by a partial reaction chamber (R1) of the first kind.

9. Device according to claim 6,
**characterized in that** corresponding partial reaction chambers (R1, R2) and cooling chambers (K) being coupled to each other are unblocked or blocked simultaneously.

10. Device according to claim 1,
**characterized in that** during normal operation partial reaction chambers (R1, R2) are unblocked or blocked in accordance with the amount of the gas mixture to be reformed.

11. Device according to claim 10,
**characterized in that** partial reaction chambers (R1, R2) unblocked and/or blocked during normal operation are distributed within the reaction chamber (1) such that a temperature gradient between blocked and unblocked partial reaction chambers (R1, R2) is at a minimum.

12. Device according to claim 1,
**characterized in that** the reaction chamber (1) is formed by a bank of tubes.

## Revendications

1. Réacteur chimique pour un système de piles à combustible, avec un compartiment de réaction (1) pouvant être traversé par un agent et comprenant au moins deux sous-compartiments de réaction (R1, R2) disposés parallèlement l'un par rapport à l'autre, la section efficace en entrée du compartiment de réaction (1) pouvant être réglée par libération ou blocage des sous-compartiments (R1, R2) séparés les uns des autres et disposés parallèlement,
**caractérisé en ce que** le compartiment de réaction (1) présente au moins un sous-compartiment de réaction (R1) d'un premier genre et au moins un sous-compartiment de réaction (R2) d'un deuxième genre, ledit sous-compartiment de réaction (R1) du premier genre étant libéré lors du démarrage du système et ledit sous-compartiment de réaction (R1) du premier genre se distinguant dans sa conception dudit sous-compartiment de réaction (R2) du deuxième genre **en ce qu'**il peut, soumis à des conditions de fonctionnement identiques, être chauffé plus rapidement que ledit sous-compartiment de réaction (R2) du deuxième genre.

2. Réacteur selon la revendication 1,
**caractérisé en ce que** ledit sous-compartiment de réaction (R1) du premier genre présente une capacité thermique plus faible et/ou un catalyseur doté d'une activité plus élevée et/ou est thermiquement moins bien couplé à son environnement et/ou moins refroidi que ledit sous-compartiment de réaction (R2) du deuxième genre.

3. Dispositif selon la revendication 1,
**caractérisé en ce que** le compartiment de réaction (1) présente au moins deux sous-compartiments de réaction (R1) du premier genre.

4. Dispositif selon la revendication 3,
**caractérisé en ce que** les différents sous-compartiments de réaction (R1) du premier genre sont répartis pour l'essentiel de manière homogène à l'intérieur du compartiment de réaction (1).

5. Dispositif selon la revendication 3,
**caractérisé en ce que** les sous-compartiments de réaction (R1) du premier genre sont rassemblés en groupes constitués de plusieurs sous-compartiments de réaction (R1) voisins et que lesdits groupes sont répartis pour l'essentiel de manière homogène à intérieur du compartiment de réaction (1).

6. Dispositif selon la revendication 1,
**caractérisé en ce que** le compartiment de réaction (1) est couplé à un compartiment de refroidissement (2) dans un réacteur à empilement de plaques.

7. Dispositif selon la revendication 6,
**caractérisé en ce que** chaque sous-compartiment de réaction (R1, R2) est respectivement couplé à un sous-compartiment de refroidissement (K).

8. Dispositif selon la revendication 6,
**caractérisé en ce que** le premier et le dernier sous-compartiment de réaction (R1) du compartiment de réaction (1) consistent en un sous-compartiment de réaction (R1) du premier genre.

9. Dispositif selon la revendication 6,
**caractérisé en ce que** les sous-compartiments de réaction (R1, R2) et les compartiments de refroidissement (K) correspondants et respectivement couplés les uns aux autres, sont libérés ou bloqués simultanément.

10. Dispositif selon la revendication 1,
**caractérisé en ce que**, en fonctionnement normal, des sous-compartiments de réaction (R1, R2) sont libérés ou bloqués en fonction de la quantité du mélange gazeux à reformer.

11. Dispositif selon la revendication 10,
**caractérisé en ce que**, en fonctionnement normal, les sous-compartiments de réaction (R1, R2) libérés et/ou bloqués sont répartis à l'intérieur du compartiment de réaction (1) de sorte telle que le gradient de température entre les sous-compartiments de réaction (R1, R2) bloqués et les sous-compartiments de réaction (R1, R2) libérés est minime.

12. Dispositif selon la revendication 1,
**caractérisé en ce que** le compartiment de réaction (1) consiste en un faisceau tubulaire.
